# EUROPEAN PATENT APPLICATION

(11) **EP 3 093 183 A2**
(43) Date of publication of application: **16.11.2016**
(21) Application number: 15177269.6
(22) Date of filing: 17.07.2015
(51) Int. Cl.: B60L 11/18

(54) **AUTOMOTIVE BATTERY SYSTEM**

(30) Priority: 14.05.2015 KR 20150067594
(71) Applicant: Samsung SDI Co., Ltd., Yongin-si, Gyeonggi-do (KR)
(72) Inventor: Gu, Jaesung, Gyeonggi-do (KR); Hans, Amendeep, Gyeonggi-do (KR)
(74) Representative: Mounteney, Simon James

(57) **Abstract**

An automotive battery system includes: a first battery pack including a plurality of first battery cells connected in series; and a second battery pack connected in parallel to the first battery pack. The second battery pack includes: n second battery cells connected in series; n voltage sensitive switching devices respectively connected to the n second battery cells; and n balancing resistors respectively connected in parallel to the n second battery cells through the n voltage sensitive switching devices. Each of the voltage sensitive switching devices is turned on if a corresponding second battery cell of the n second battery cells has a cell voltage higher than a reference voltage. The reference voltage is set to be higher than a value obtained by dividing a maximum operation voltage of the first battery pack by n where n is a natural number equal to or greater than 2.

## Description

### BACKGROUND

### 1. Field

One or more embodiments of the invention relate to an automotive battery system including a plurality of battery packs.

### 2. Description of the Related Art

Battery packs are used to start automobiles or operate electric loads of automobiles. As automobiles include more electric loads, battery packs having higher capacity are used in automobiles. In automobiles, battery packs are charged by alternators converting rotation energy generated by engines into electric energy. Research has been conducted into methods of improving the charge efficiency of battery packs and battery systems suitable for the methods, so as to improve the fuel efficiency of automobiles. For example, automotive battery systems in which different kinds of battery packs are connected in parallel have been researched.

Different kinds of battery packs are connected to each other through a power converter including a switching device. Since power is transmitted through the power converter, switching and conversion loss are produced. In addition, battery cells connected in series in the battery packs may be unbalanced, and thus the efficiency of the battery packs may deteriorate. If a cell balancing operation is performed using a microprocessor to address cell imbalance, power consumption increases due to the operation of the microprocessor. In addition, system complexity and manufacturing costs are also increased.

### SUMMARY

The present invention sets out to provide an automotive battery system having improved efficiency.

Additional aspects of the invention will be set forth in part in the description which follows and, in part, will be apparent from the description, or may be learned by practice of the presented embodiments.

According to one or more embodiments of the invention, an automotive battery system includes: a first battery pack including a plurality of first battery cells connected in series; and a second battery pack connected in parallel to the first battery pack. The second battery pack includes: n second battery cells connected in series; n voltage sensitive switching devices respectively connected to the n second battery cells; and n balancing resistors respectively connected in parallel to the n second battery cells through the n voltage sensitive switching devices. Each of the voltage sensitive switching devices is turned on if a corresponding second battery cell of the n second battery cells has a cell voltage higher than a reference voltage. The reference voltage is set to be higher than a value obtained by dividing a maximum operation voltage of the first battery pack by n where n is a natural number equal to or greater than 2.

For example, the reference voltage may be set to be higher than a value obtained by dividing an open-circuit voltage of the first battery pack in a completely charged state by n.

For example, the reference voltage may be set to be higher than a first open-circuit voltage of the corresponding second battery cell measured at about 30% state of charge (SOC) but lower than a second open-circuit voltage of the corresponding second battery cell measured at about 70% SOC.

For example, the automotive battery system may further include external terminals for connection with an alternator that converts kinetic energy of an automobile into electric energy and supplies the electric energy to the first and second battery packs. The reference voltage may be set to be lower than a value obtained by dividing a charge voltage, output from the alternator to the first and second battery packs when the automobile operates in a regenerative braking mode, by n.

For example, when the automobile operates in the regenerative braking mode, balancing current may flow through the balancing resistors. The balancing current may increase as cell voltages of the second battery cells connected in parallel to the balancing resistors increase.

For example, balancing current flowing through the balancing resistors may be lower than about 100 mA.

For example, each of the voltage sensitive switching devices may include: a voltage divider connected between a first node and a second node and outputting a divided voltage in proportion to a voltage difference between the first and second nodes; and a shunt regulator connected between the first and second nodes, the shunt regulator being configured to electrically connect the first and second nodes if the divided voltage output from the voltage divider may be higher than a preset critical voltage.

For example, the voltage divider may include a first resistor and a second resistor that are connected in series between the first and second nodes. The reference voltage may be set based on a resistance ratio of the first and second resistors and the critical voltage.

For example, the second battery pack may further may include a battery management unit detecting cell voltages of the second battery cells and a pack current of the second battery pack and determining SOC of the second battery pack based on the cell voltages and the pack current.

For example, the battery management unit may calculate electric energy consumed by the balancing resistors based on the cell voltages of the second battery cells and the reference voltage and may determine the SOC of the second battery pack based on a value obtained by subtracting the electric energy consumed by the balancing resistors from electric energy supplied to the second battery pack.

For example, each of the second battery cells may include a negative electrode including a negative electrode active material. The negative electrode active material may include soft carbon.

For example, each of the second battery cells may include a negative electrode including a negative electrode active material. The negative electrode active material may include a carbonaceous material in which interlayer spacing d₀₀₂ between (002) planes is within a range of about 0.34 nm to about 0.50 nm when measured by an X-ray diffraction method using CuKα.

For example, ach of the second battery cells may include a positive electrode including a positive electrode active material. The positive electrode active material may include lithium nickel oxide, lithium cobalt oxide, lithium nickel manganese oxide, lithium nickel cobalt manganese oxide, lithium nickel cobalt aluminum oxide, lithium iron phosphate oxide, or a combination thereof.

For example, the first battery cells may be lead battery cells.

For example, the second battery pack may have a maximum operation voltage higher than that of the first battery pack. The second battery pack has internal resistance lower than that of the first battery pack.

At least some of the above and other features of the invention are set out in the claims.

### BRIEF DESCRIPTION OF THE DRAWINGS

The above and/or other aspects of the invention will become apparent and more readily appreciated from the following description of embodiments thereof, taken in conjunction with the accompanying drawings in which:
FIG. 1 is a partial block diagram illustrating an automotive system including an automotive battery system according to an embodiment of the invention;
FIGS. 2A to 2C are graphs illustrating the speed of an automobile, the amount of fuel injection in the automobile, and the output voltage of an alternator with respect to time so as to explain regenerative braking;
FIG. 3 is a schematic block diagram illustrating the automotive battery system according to an embodiment of the invention;
FIG. 4 is a cross-sectional view illustrating a second battery cell of the automotive battery system according to an embodiment of the invention;
FIG. 5 is a graph illustrating the voltage levels of first and second battery packs of the automotive battery system during a charge operation according to an embodiment of the invention;
FIG. 6 is a block diagram illustrating a voltage sensitive switching device of the second battery pack according to an embodiment of the invention; and
FIG. 7 is a schematic block diagram illustrating an automotive battery system according to another embodiment of the invention.

### DETAILED DESCRIPTION

Advantages and features of embodiments of the invention, and implementation methods thereof will be clarified through the following descriptions given with reference to the accompanying drawings. However, the invention may have different forms and should not be construed as being limited to the descriptions set forth herein, and it should be understood that the idea and technical scope of the invention covers all the modifications, equivalents, and replacements. Rather, these embodiments are provided so that this disclosure will be thorough, and will convey the scope of the inventive concept to those skilled in the art. Moreover, detailed descriptions related to well-known functions or configurations will be ruled out in order not to unnecessarily obscure subject matters of the present disclosure. As used herein, the term "and/or" includes any and all combinations of one or more of the associated listed. Expressions such as "at least one of," when preceding a list of elements, modify the entire list of elements and do not modify the individual elements of the list.

In the following description, the technical terms are used only for explaining a specific embodiment while not limiting the inventive concept. The terms of a singular form may include plural forms unless referred to the contrary. The meaning of 'include' or 'comprise' specifies a property, a fixed number, a step, a process, an element, a component, and a combination thereof but does not exclude other properties, fixed numbers, steps, processes, elements, components, and combinations thereof. It will be understood that although the terms "first" and "second" are used herein to describe various elements, these elements should not be limited by these terms. Terms are only used to distinguish one element from other elements.

Hereinafter, embodiments of the invention will be described in detail with reference to the accompanying drawings. In the drawings, like reference numerals denote like elements, and repeated descriptions thereof will be omitted.

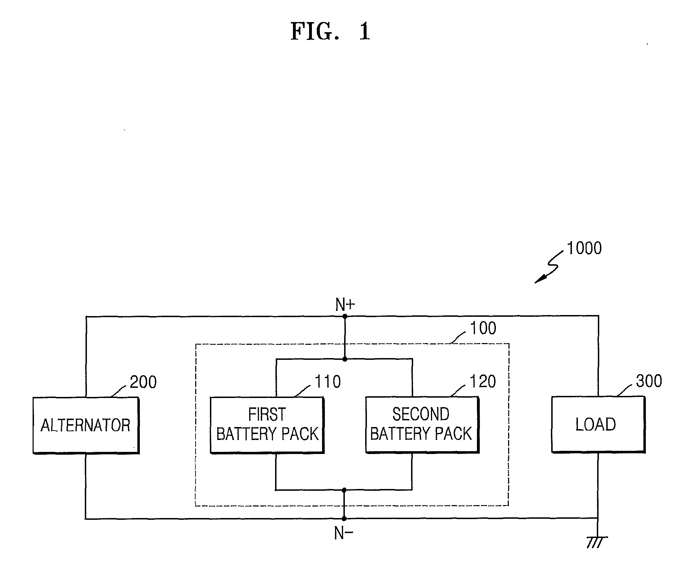

FIG. 1 is a partial block diagram of an automotive system including an automotive battery system 100 according to an embodiment of the invention.

Referring to FIG. 1, an automobile 1000 includes the automotive battery system 100, an alternator 200 supplying electricity to the automotive battery system 100, and a load 300 configured to operate using electricity received from the automotive battery system 100. The automotive battery system 100 includes a first battery pack 110 and a second battery pack 120 connected in parallel between a first node N+ and a second node N-. The first node N+ and the second node N- are also connected to the alternator 200 and the load 300, and the second node N- may be connected to ground or a panel of the automobile 1000.

In the automotive battery system 100, the first battery pack 110 may be a lead battery lead (e.g., lead-acid) pack, and the second battery pack 120 may be a lithium-ion battery pack. In FIG. 1, only the first battery pack 110 and the second battery pack 120 are illustrated. However, the embodiments of the present disclosure are not limited thereto. For example, the automotive battery system 100 may include two or more first battery packs 110 and two or more second battery packs 120.

The alternator 200 supplying electricity to the automobile 1000 may be referred to as an "AC generator." Electricity generated by the alternator 200 may be used to operate the load 300 or charge the first and second battery packs 110 and 120 of the automotive battery system 100. If electricity generated by the alternator 200 is insufficient for operating the load 300, electricity stored in the first and second battery packs 110 and 120 may be supplied to the load 300.

In the related art, the alternator 200 is configured to generate electricity with a preset voltage, and thus there is a possibility of useless fuel consumption. To address this, when the automobile 1000 is decelerated, fuel is not injected, and the alternator 200 is intensively operated. Furthermore, when the automobile 1000 operates in fuel injection mode such as idle mode, constant-speed driving mode, or acceleration mode, the alternator 200 is minimally operated.

That is, when the automobile 1000 needs to be decelerated, the alternator 200 converts kinetic energy of the automobile 1000 into electric energy and charges the first and second battery packs 110 and 120 with the electric energy. Therefore, since kinetic energy of the automobile 1000 is reduced as much as generated electric energy, the automobile 1000 may be decelerated. This method is called "regenerative braking."

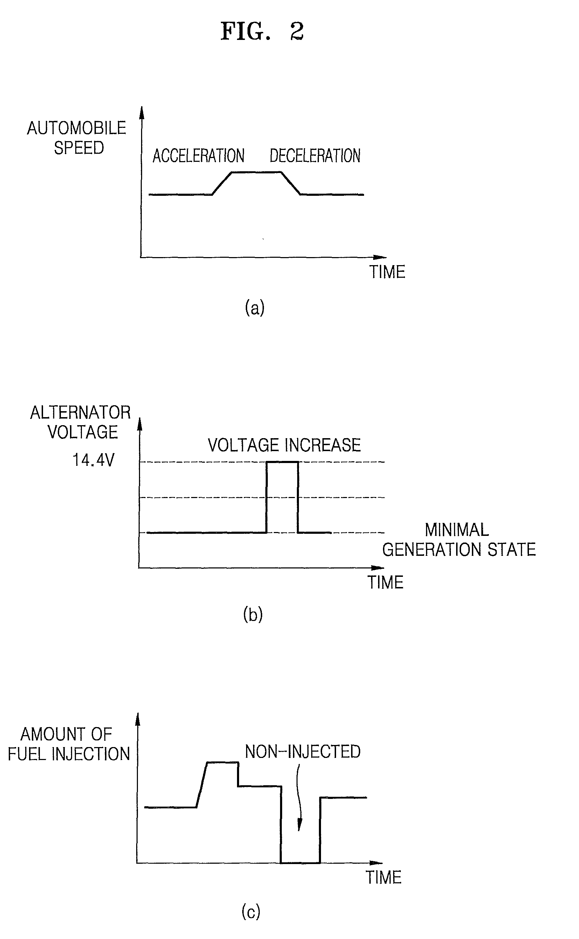

FIGS. 2A to 2C are graphs illustrating the speed (2A) of the automobile 1000, the amount of fuel injection (2B) in the automobile 1000, and the output voltage (2C) of the alternator 200 with respect to time, so as to explain regenerative braking.

If a gas pedal of the automobile 1000 is stepped on, the automobile 1000 is accelerated, and if the gas pedal is not stepped on, the automobile 1000 may be decelerated. As shown in FIGS. 2A to 2C, the automobile 1000 may be accelerated, decelerated, or driven at a constant speed.

When the automobile 1000 is accelerated or driven at a constant speed, fuel is consumed. When the automobile 1000 is accelerated, the rate of fuel consumption may be highest, and when the automobile 1000 is driven at a constant speed, the rate of fuel consumption is proportional to the speed of the automobile 1000. When the automobile 1000 is decelerated, fuel is not injected.

The alternator 200 may be configured to output a high voltage and supply electricity to the first and second battery packs 110 and 120 when the automobile 1000 is decelerated. Since the output voltage of the alternator 200 is applied to the first and second battery packs 110 and 120 for charging the battery packs 110 and 120, the output voltage of the alternator 200 may be called a "charge voltage." In an example shown in FIG. 2A, the output voltage of the alternator 200 is about 14.4V.

Except for the time when the automobile 1000 is decelerated, the alternator 200 may not generate electricity or generate a minimum amount of electricity. As shown in FIG. 2C, when fuel is injected, the output voltage of the alternator 200 may be maintained at a minimal electricity generation level.

In the automobile 1000, the output voltage of the alternator 200 is higher in regenerative braking mode than in fuel injection mode. Furthermore, since the alternator 200 generates more electricity in regenerative braking mode than in fuel injection mode, the output current of the alternator 200 is higher in regenerative braking mode than in fuel injection mode by about several tens of amperes (A). The features of the first and second battery packs 110 and 120 may be selected such that the automotive battery system 100 stores all electricity generated by the alternator 200 in regenerative braking mode.

Referring again to FIG. 1, in regenerative braking mode, the alternator 200 may convert kinetic energy of the automobile 1000 into electric energy and may supply the generated electric energy to the first and second battery packs 110 and 120. When the automobile 1000 is driven mostly at a constant speed like on an expressway, the first and second battery packs 110 and 120 may be insufficiently charged by the regenerative braking method. In this case, the alternator 200 may output a preset electricity generation voltage by taking into consideration the state of charge (SOC) of the first and second battery packs 110 and 120.

The load 300 may refer to various kinds of loads included in the automobile 1000. The load 300 is an electric load receiving electricity from one or more of the alternator 200 and the automotive battery system 100.

The capacity of the first battery pack 110 may be selected within the range of about 60 Ah to about 100 Ah, and the capacity of the second battery pack 120 may be selected within the range of about 4 Ah to about 20 Ah. The internal resistance of the first battery pack 110 may be higher than that of the second battery pack 120, and the maximum operation voltage of the first battery pack 110 may be lower than that of the second battery pack 120. The charge rate and discharge rate of the second battery pack 120 may be higher than those of the first battery pack 110.

For example, the first battery pack 110 may be a lead battery pack, and the second battery pack 120 may be a lithium-ion battery pack. The load 300 may first receive electricity from the second battery pack 120, and if the SOC of the second battery pack 120 decreases while being discharged, the load 300 may receive electricity from the first battery pack 110. Furthermore, in regenerative braking mode, most of the electricity generated by the alternator 200 may be supplied to the second battery pack 120 having a relatively low degree of internal resistance. In this case, overcharging of the first battery pack 110 may be prevented, and the first battery pack 110 may not be damaged by a high charge current output from the alternator 200 in regenerative braking mode.

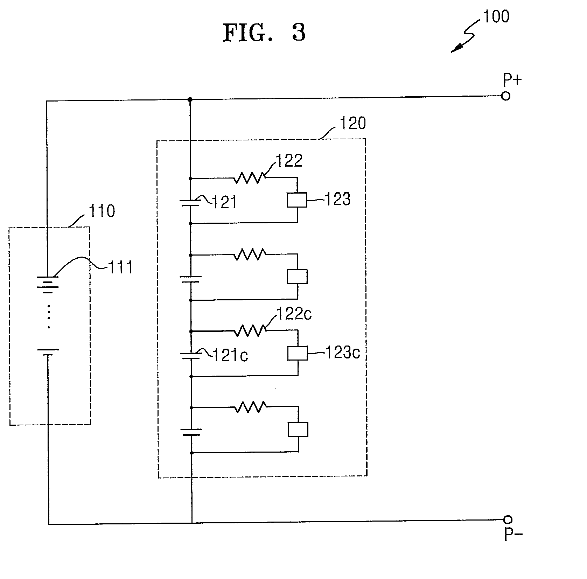

FIG. 3 is a schematic block diagram illustrating the automotive battery system 100 according to an embodiment of the invention.

Referring to FIG. 3, the automotive battery system 100 includes the first and second battery packs 110 and 120 connected in parallel. The first and second battery packs 110 and 120 are connected in parallel between external terminals P+ and P-. The external terminals P+ and P- are respectively connected to the first node N+ and the second node N- so that the external terminals P+ and P- may be connected to the alternator 200 and the load 300.

The first battery pack 110 may include a plurality of first battery cells 111 connected in series, and the second battery pack 120 may include a plurality of second battery cells 121 connected in series. The first battery cells 111 may be lead battery cells, and the second battery cells 121 may be lithium-ion battery cells. However, the embodiments of the present disclosure are not limited thereto. In another embodiment, the first and second battery cells 111 and 121 may be different kinds of battery cells having different electrochemical characteristics.

The first battery pack 110 may include six lead battery cells connected in series, and the second battery pack 120 may include four lithium-ion battery cells connected in series. However, the embodiments of the present disclosure are not limited thereto. For example, the number of first battery cells 111 included in the first battery pack 110 and the number of second battery cells 121 included in the second battery pack 120 may be varied according to the specified battery voltage of the automobile 1000 and the kinds of the first and second battery cells 111 and 121. In this specification, it is assumed that the specified battery voltage of the automobile 1000 is 12 V. However, the embodiments of the present invention are not limited thereto. For example, the specified battery voltage of the automobile 1000 may be 24 V or 48 V. Furthermore, in this specification, it is assumed that the first battery pack 110 includes six lead battery cells connected in series as first battery cells 111, and the second battery pack 120 includes four lithium-ion battery cells connected in series as second battery cells 121. In the following description, the number of lithium-ion battery cells (second battery cells) 121 connected in series inside the second battery pack 120 may be expressed as 4 or n where n denotes a natural number equal to or greater than 2.

In addition to the six lead battery cells connected in series, the first battery pack 110 may further include lead battery cells connected in parallel to the six lead battery cells according to the capacity of the automotive battery system 100. Furthermore, in addition to the four lithium-ion battery cells connected in series, the second battery pack 120 may further include lithium-ion battery cells connected in parallel to the lithium-ion battery cells.

The second battery cells 121 may include negative electrodes formed of a material such as amorphous carbon and positive electrodes formed of a material such as nickel (Ni) or lithium iron phosphate (LFP). For example, the negative electrodes of the second battery cells 121 may include a negative electrode active material containing soft carbon. For example, the negative electrodes of the second battery cells 121 may include a negative electrode active material that has a carbonaceous material, and the interlayer spacing d₀₀₂ between (002) planes of the carbonaceous material may be within the range of about 0.34 nm to about 0.50 nm when measured by an X-ray diffraction method using CuKα. For example, the positive electrodes of the second battery cells 121 may include a positive electrode active material that contains lithium nickel oxide, lithium cobalt oxide, lithium nickel manganese oxide, lithium nickel cobalt manganese oxide, lithium nickel cobalt aluminum oxide, lithium iron phosphate oxide, or a combination thereof.

The second battery pack 120 may further include a plurality of balancing resistors 122 and a plurality of voltage sensitive switching devices 123. As shown in FIG. 3, the number of the second battery cells 121, the number of the balancing resistors 122, and the number of the voltage sensitive switching devices 123 may be the same as n (for example, n is four as shown in FIG. 3). The voltage sensitive switching devices 123 may be respectively connected to the second battery cells 121. The balancing resistors 122 may be respectively connected in parallel to the second battery cells 121 through the voltage sensitive switching devices 123.

The balancing resistors 122 may have the same resistance. The balancing resistors 122 may have a resistance of about 100 Ω or less. For example, the balancing resistors 122 may have a resistance of about 20 Ω or less. The resistance of each balancing resistors 122 may be set such that a balancing current flowing through each balancing resistor 122 may be about 100 mA or less. A balancing current of about 100 mA or less is about 1/10 or less than a charge current applied to the second battery cells 121 when the second battery pack 120 is charged.

Each of the voltage sensitive switching devices 123 is turned on when the cell voltage of a corresponding second battery cell 121 is higher than a reference voltage. For example, referring to FIG. 3, a voltage sensitive switching device 123c located at a third position is turned on when the cell voltage of a second battery cell 121c located at the third position is higher than the reference voltage. If the voltage sensitive switching devices 123 are turned on, balancing current flow through the balancing resistors 122 respectively connected to the voltage sensitive switching devices 123. For example, if the voltage sensitive switching device 123c is turned on, balancing current flows from the second battery cell 121 c to a balancing resistor 122c located at the third position.

In an embodiment of the invention, the reference voltage may be set to be higher than a value calculated by dividing the maximum operation voltage of the first battery pack 110 by n. For example, the operation voltage of the first battery pack 110 may range from about 10.5 V to about 13.2 V, and the maximum operation voltage of the first battery pack 110 may be about 13.2 V. In this case, if n is 4, the reference voltage may be set to be higher than 3.3 V obtained by dividing 13.2 V by 4. For example, the reference voltage may be set to be 3.5 V.

In another embodiment of the invention, the reference voltage may be set to be higher than a value calculated by dividing the open-circuit voltage of the first battery pack 110 in a completely charged state (100% SOC) by n. For example, the open-circuit voltage of the first battery pack 110 may be about 12.6 V at 100% SOC. In this case, if n is 4, the reference voltage may be set to be higher than 3.15 V calculated by dividing 12.6 V by 4. For example, the reference voltage may be set to be 3.3 V.

In another embodiment of the invention, the reference voltage may be set to be higher than the open-circuit voltages of the second battery cells 121 at about 30% SOC but lower than the open-circuit voltages of the second battery cells 121 at about 70% SOC. For example, the open-circuit voltages of the second battery cells 121 may be about 3.0 V at about 30% SOC and about 3.8 V at about 70% SOC. For example, the reference voltage may be set to be greater than 3.0 V but less than 3.8 V. For example, the reference voltage may be set to be 3.3 V or 3.5 V.

In another embodiment of the invention, a charge voltage output from the alternator 200 to the automotive battery system 100 when the automobile 1000 operates in regenerative braking mode may be divided by n, and the reference voltage may be set to be lower than the value calculated by dividing the charge voltage by n. For example, the charge voltage output from the alternator 200 to the automotive battery system 100 when the automobile 1000 operates in regenerative braking mode may be about 14.4 V. In this case, if n is 4, the reference voltage may be set to be lower than 3.6 V calculated by dividing 14.4 V by 4. For example, the reference voltage may be set to be 3.3 V or 3.5 V.

In another embodiment of the invention, the minimum value of a specified range of the charge voltage output from the alternator 200 to the automotive battery system 100 when the automobile 1000 operates in regenerative braking mode may be divided by n, and the reference voltage may be set to be higher than the value calculated by dividing the minimum value by n. For example, the specified range of the charge voltage output from the alternator 200 to the automotive battery system 100 when the automobile 1000 operates in regenerative braking mode may range from 12.6 V to 14.4 V. In this case, if n is 4, the reference voltage may be set to be higher than 3.15 V calculated by dividing the minimum value, 12.6 V, by 4. For example, the reference voltage may be set to be 3.3 V or 3.5 V.

For example, the alternator 200 of the automobile 1000 may output a charge voltage of about 14.4 V to the automotive battery system 100. In this case, the cell voltage of one or more of the second battery cells 121 may be higher than the reference voltage. For example, the cell voltage of the second battery cell 121c may be higher than the reference voltage. Then, the voltage sensitive switching device 123c corresponding to the second battery cell 121c is turned on, and thus balancing current flows through the balancing resistor 122c. In this case, the balancing current is calculated by dividing a potential difference between both ends of the balancing resistor 122c by the resistance of the balancing resistor 122c. The potential difference between both ends of the balancing resistor 122c corresponds to the difference between the cell voltage of the second battery cell 121c and the reference voltage. Therefore, the balancing current flowing through the balancing resistor 122c is increased in proportion to the cell voltage of the second battery cell 121c.

The balancing current flowing through the balancing resistor 122c does not serve to charge the second battery cell 121c. That is, the charge efficiency of the second battery cell 121c decreases as the balancing current flowing through the balancing resistor 122c increases. Therefore, the charge efficiency of the second battery cell 121 c decreases as the cell voltage of the second battery cell 121c increases, that is, as the second battery cell 121 c is charged. As a result, imbalance between the second battery cells 121 decreases. In other words, the second battery cells 121 are balanced.

According to an embodiment of the invention, the second battery cells 121 are balanced mainly when the automotive battery system 100 is charged by the alternator 200 in the regenerative braking mode of the automobile 1000. The reason for this is that the reference voltage is determined based on the charge voltage of the alternator 200. If cell balancing occurs while the automotive battery system 100 is discharged, the discharge rate of the automotive battery system 100 may be increased, and thus automotive battery system 100 may be completely discharged. While the automotive battery system 100 operates in charge mode, the second battery cells 121 may be restrictively balanced by setting the reference voltage as described in the above embodiments without having to use an additional device for detecting whether the automotive battery system 100 operates in charge mode and controlling cell balancing based on results of the detection. While the automotive battery system 100 is charged, the automotive battery system 100 may not be completely discharged.

According to the above embodiments, the second battery cells 121 are not balanced if the second battery cells 121 are at a low SOC. The reason for this is that the reference voltage is determined based on the open-circuit voltages of the second battery cells 121 according to the SOC of the second battery cells 121. If the possibility of complete discharge of the second battery cells 121 is high, the second battery cells 121 may not be balanced for operating the automotive battery system 100 in a more reliable manner.

According to embodiments of the invention, the second battery cells 121 have an ability of receiving a high charge current temporarily supplied from the alternator 200 of the automobile 1000 and supplying a high discharge current to the load 300 of the automobile 1000. To this end, the second battery cells 121 may be controlled to have a preset SOC. According to various embodiments of the invention, the open-circuit voltage of the second battery cells 121 at about 50% SOC may be set as the reference voltage. Therefore, the second battery cells 121 may be maintained at a preset SOC without the help of active control of a microprocessor.

According to embodiments of the invention, in the automotive battery system 100, the first battery pack 110 and the second battery pack 120 are connected in parallel. If the automotive battery system 100 does not include the first battery pack 110 or the parallel connection between the first and second battery packs 110 and 120 is broken, even when the automobile 1000 is parked, the SOC of the second battery cells 121 is lowered to a level corresponding to the reference voltage due to cell balancing. However, according to the embodiments, the second battery pack 120 is connected in parallel to the first battery pack 110, and the operation voltage of the first battery pack 110 is lower than a voltage corresponding to the reference voltage. Therefore, electric energy stored in the second battery cells 121 may not be consumed by cell balancing but may be used to charge the first battery pack 110. Therefore, when the automobile 1000 is in a parked state, electricity is not unnecessarily consumed by cell balancing.

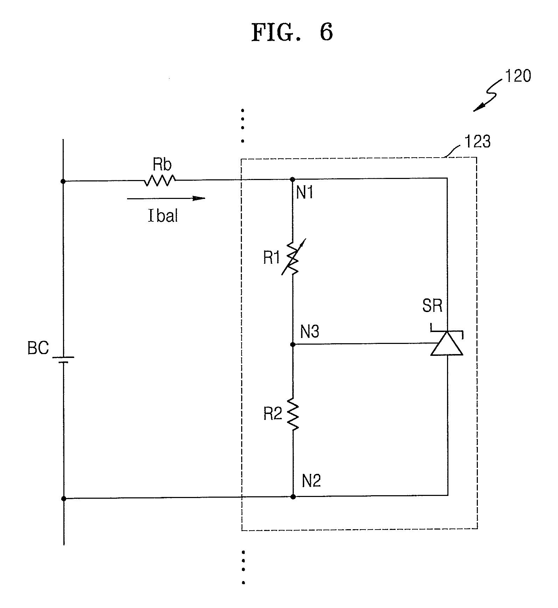

The voltage sensitive switching devices 123 will be described later in more detail with reference to FIG. 6.

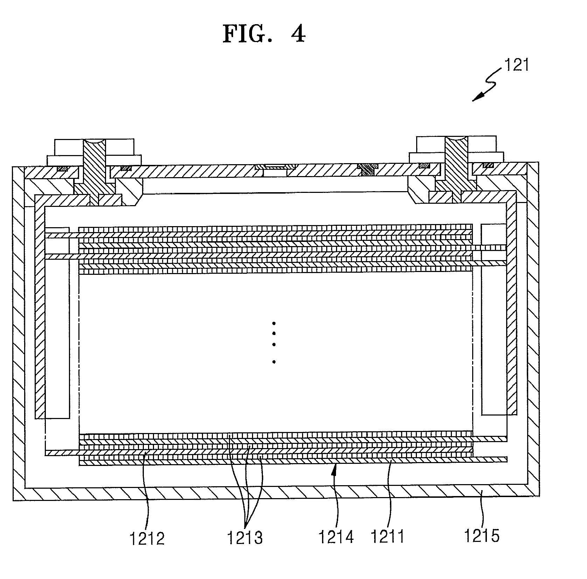

FIG. 4 is a cross-sectional view illustrating a second battery cell 121 of the automotive battery system 100 according to an embodiment of the invention.

Referring to FIG. 4, the second battery cell 121 is a prismatic lithium-ion battery cell. However, the embodiments of the present disclosure are not limited thereto. For example, various kinds of battery cells such as lithium polymer battery cells or cylindrical battery cells may be used as the second battery cells 121 of the automotive battery system 100.

Referring to FIG. 4, the second battery cell (lithium-ion battery cell) 121 of the embodiment includes an electrode assembly 1214 and a case 1215. The electrode assembly 1214 is formed by disposing a separator 1213 between a positive electrode 1211 and a negative electrode 1212 and winding the positive electrode 1211, the separator 1213, and the negative electrode 1212. Inside the case 1215, the positive electrode 1211, the separator 1213, and the negative electrode 1212 may be impregnated with an electrolyte (not shown).

The negative electrode 1212 may include a current collector and a negative electrode active material layer on the current collector. The current collector of the negative electrode 1212 may be formed of a material selected from copper foil, stainless steel foil, titanium foil, nickel foam, copper foam, polymer film coated with a conductive metal, or a combination thereof.

The negative electrode active material layer of the negative electrode 1212 may include a negative electrode active material, and the negative electrode active material may include a material capable of reversibly intercalating/deintercalating lithium ions.

For example, the negative electrode active material may include a carbonaceous material in which the interlayer spacing d₀₀₂ between (002) planes is within the range of about 0.34 nm to about 0.50 nm when measured by an X-ray diffraction method using CuKα. For example, the interlayer spacing d₀₀₂ may be within the range of about 0.34 nm to about 0.45 nm, about 0.34 nm to about 0.40 nm, about 0.34 nm to about 0.37 nm, or about 0.34 nm to about 0.36 nm. If the interlayer spacing d₀₀₂ is within the above-mentioned range, intercalation and deintercalation of lithium ions may easily occur, and thus the lithium-ion battery cell 121 may have high-rate charge/discharge characteristics. If the negative electrode active material includes a material having an interlayer spacing d₀₀₂ of less than about 0.34 nm such as graphite, intercalation and deintercalation of lithium ions may not easily occur, thereby resulting in poor charge/discharge characteristics.

The carbonaceous material may be amorphous carbon. Unlike crystalline carbon such as graphite, amorphous carbon has non-limited paths for intercalation/deintercalation of lithium ions and prevents swelling of electrodes. Therefore, the lithium-ion battery cell 121 including amorphous carbon in the negative electrode active material may have a high degree of output power, a long lifespan, and a high degree of reversible capacity through a heat treatment process at 800°C or lower.

For example, the carbonaceous material may be soft carbon. Soft carbon is graphitizable carbon having an atomic arrangement that may easily form a layered structure. Soft carbon is easily graphitized if heat-treated at a high temperature. Compared to graphite, soft carbon has disordered crystals, and thus a large number of gates helping intercalation/deintercalation of ions are preset in soft carbon. The degree of crystal disorder of soft carbon is lower than that of hard carbon, and thus ions easily diffuse in soft carbon. For example, the carbonaceous material may be low crystalline soft carbon. The amorphous carbon may be hard carbon, mesophase pitch carbide, or fired coke.

The carbonaceous material may have an average particle diameter D50 within the range of about 1 µm to about 50 µm. For example, the carbonaceous material may have an average particle diameter D50 within the range of about 1 µm to about 40 µm, about 1 µm to about 30 µm, about 1 µm to about 20 µm, about 5 µm to about 50 µm, about 10 µm to about 50 µm, about 5 µm to about 15 µm, or about 6 µm to about 12 µm. In this case, proper pores may be formed in the negative electrode active material, and thus a large number of lithium ion paths connecting crystalline portions or a large number of activation sites functioning as storages may be formed in the negative electrode active material. As a result, the negative electrode active material may have a low degree of contact resistance, rapid storage characteristics, and high output power characteristics at low temperatures. D50 refers to a particle size corresponding to a 50 volume% in a cumulative size-distribution curve.

The carbonaceous material may have a shape such as a spherical shape, a plate shape, a flake shape, or a fiber shape. For example, the carbonaceous material may have a needle shape.

The carbonaceous material may have a specific surface area within the range of about 0.1 m²/g to about 20 m²/g. For example, the carbonaceous material may have a specific surface area within the range of about 0.1 m²/g to about 10 m²/g, about 1 m²/g to about 20 m²/g, about 1 m²/g to about 10 m²/g, or about 1 m²/g to about 5 m²/g. In this case, the carbonaceous material may be low crystalline carbonaceous material, and thus the lithium-ion battery cell 121 may have high-rate characteristics and a long lifespan.

The carbonaceous material may have a tap density within the range of about 0.30 g/cm³ to about 10.00 g/cm³. For example, the carbonaceous material may have a tap density within the range of about 0.60 g/cm³ to about 10.00 g/cm³, about 0.30 g/cm³ to about 5.00 g/cm³, or about 0.60 g/cm³ to about 5.00 g/cm³. In this case, the carbonaceous material may be low crystalline carbonaceous material, and thus the lithium-ion battery cell 121 may have high-rate characteristics and a long lifespan.

The negative electrode active material layer may further include a binder facilitating attachment of the negative electrode active material to the current collector and attachment between particles of the negative electrode active material. The negative electrode active material layer may further include a conducting agent so as to impart conductivity to the negative electrode 1212.

The positive electrode 1211 may include a current collector and a positive electrode active material layer on the current collector. The current collector of the positive electrode 1211 may include aluminum. However, the current collector of the positive electrode 1211 is not limited thereto.

The positive electrode active material layer of the positive electrode 1211 may include a positive electrode active material, and the positive electrode active material may include a compound (lithiated intercalation compound) capable of reversibly intercalating and deintercalating lithium.

For example, the positive electrode active material may be lithium nickel cobalt manganese oxide or lithium iron phosphate oxide. The positive electrode active material may include lithium nickel oxide, lithium cobalt oxide, lithium nickel manganese oxide, lithium nickel cobalt manganese oxide, lithium nickel cobalt aluminum oxide, lithium iron phosphate oxide, or a combination thereof.

The positive electrode active material may include at least one of cobalt, manganese, nickel, or a compound oxide of lithium and any combination of the listed metals. For example, the positive electrode active material may include a compound expressed by any one of the following formulas.

LiₐA_{1-b}R_{b}D₂ (0.90≤a≤1.8, 0≤b≤0.5); LiₐE_{1-b}R_{b}O_{2-c}D_{c} (0.90≤a≤1.8, 0≤b≤0.5, 0≤c≤0.05); LiE_{2-b}R_{b}O_{4-c}D_{c} (0≤b≤0.5, 0≤c≤0.05); LiₐNi_{1-b-c}CO_{b}R_{c}D_{α} (0.90≤a≤1.8, 0≤b≤0.5, 0≤c≤0.05, 0≤α≤2); LiₐNi_{1-b-c}Co_{b}R_{c}O_{2-α}Z_{α} (0.90≤a≤1.8, 0≤b≤0.5, 0≤c≤0.05, 0<α<2); LiₐNi_{1-b-c}Co_{b}R_{c}O_{2-α}Z₂ (0.90≤a≤1.8, 0≤b≤0.5, 0≤c≤0.05, 0<α<2); LiₐNi_{1-b-c}Mn_{b}R_{c}D_{α} (0.90≤a≤1.8, 0≤b≤0.5, 0≤c≤0.05, 0<α≤2); LiₐNi_{1-b-c}Mn_{b}R_{c}O_{2-α}Z_{α} (0.90≤a≤1.8, 0≤b≤0.5, 0≤c≤0.05, 0<α<2); LiₐNi_{1-b-c}Mn_{b}R_{c}O_{2-α}Z₂ (0.90≤a≤1.8, 0≤b≤0.5, 0≤c≤0.05, 0<α<2); LiₐNi_{b}E_{c}G_{d}O₂ (0.90≤a≤1.8, 0≤b≤0.9, 0≤c≤0.5, 0.001≤d≤0.1); LiₐNi_{b}Co_{c}Mn_{d}GeO₂ (0.90≤a≤1.8, 0≤b≤0.9, 0≤c≤0.5, 0≤d≤0.5, 0.001≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMnG_{b}O₂ (0.90≤a≤1.8, 0.001≤b≤0.1); LiₐMn₂G_{b}O₄ (0.90≤a≤1.8, 0.001≤b≤0.1); QO₂; QS₂; LiQS₂; V₂O₅; LiV₂O₅; LiTO₂; LiNiVO₄; Li_{(3-f)}J₂(PO₄)₃ (0≤f≤2); Li_{(3-f)}Fe₂(PO₄)₃ (0≤f≤2); and LiFePO₄.

In the above-listed formulas, A is nickel (Ni), cobalt (Co), manganese (Mn), or a combination thereof; R is aluminum (Al), nickel (Ni), cobalt (Co), manganese (Mn), chromium (Cr), iron (Fe), magnesium (Mg), strontium (Sr), vanadium (V), a rare earth element, or a combination thereof; D is oxygen (O), fluorine (F), sulfur (S), phosphorus (P), or a combination thereof; E is cobalt (Co), manganese (Mn), or a combination thereof; Z is fluorine (F), sulfur (S), phosphorus (P), or a combination thereof; G is aluminum (Al), chromium (Cr), manganese (Mn), iron (Fe), magnesium (Mg), lanthanum (La), cerium (Ce), strontium (Sr), vanadium (V), or a combination thereof; Q is titanium (Ti), molybdenum (Mo), manganese (Mn), or a combination thereof; T is chromium (Cr), vanadium (V), iron (Fe), scandium (Sc), yttrium (Y), or a combination thereof; J is vanadium (V), chromium (Cr), manganese (Mn), cobalt (Co), nickel (Ni), copper (Cu), or a combination thereof.

The positive electrode active material may further include a coating layer in addition to the compound, and the coating layer may be formed on a surface of the compound or mixed with the compound. The coating layer may include a coating compound selected from an oxide of a coating element, a hydroxide of a coating element, an oxyhydroxide of a coating element, an oxycarbonate of a coating element, or a hydroxyl carbonate of a coating element. The coating compound may be amorphous or crystalline. Examples of the coating element include magnesium (Mg), aluminum (Al), cobalt (Co), potassium (K), sodium (Na), calcium (Ca), silicon (Si), titanium (Ti), vanadium (V), tin (Sn), germanium (Ge), gallium (Ga), boron (B), arsenic (As), zirconium (Zr), and mixtures thereof.

The positive electrode active material may further include a carbon material. The positive electrode active material may further include a carbon material having a surface area within the range of about 500 m²/g to about 2500 m²/g. For example, the carbon material may have a surface area within the range of about 1000 m²/g to 2500 m²/g or about 1200 m²/g to about 2000 m²/g. In this case, the positive electrode active material may have more activation sites and thus a high intercalation/deintercalation rate. As a result, the lithium-ion battery cell 121 may have high-rate characteristics and a long lifespan.

The content of the carbon material may be within the range of about 0.1 wt% to about 20 wt% based on the total amount of the positive electrode active material. For example, the content of the carbon material may be within the range of about 0.1 wt to about 10 wt%, about 1 wt% to about 12 wt%, about 1 wt% to about 10 wt%, about 3 wt% to about 12 wt%, or about 3 wt% to about 10 wt%.

The carbon material may adsorb benzene in an amount of about 38 wt% to about 85 wt%. For example, the carbon material may adsorb benzene in an amount of about 40 wt% to about 75 wt%. The amount of benzene that the carbon material can adsorb may be markedly varied according to the structure and distribution of internal pores of the carbon material. If the carbon material having a benzene adsorption capacity within the above-mentioned range is included in the positive electrode active material, pores functioning as lithium ion paths and storages may have optimal volumes in the positive electrode active material, and in this case, the positive electrode active material may have high-rate characteristics, long lifespan characteristics, and capacity retention characteristics.

The positive electrode active material layer may further include a binder and/or a conducting agent.

Each of the negative electrode 1212 and the positive electrode 1211 may be manufactured by mixing an active material, a binder, and a conducting agent in a solvent to form an active material composition, and applying the composition to a current collector.

The electrolyte includes a non-aqueous organic solution and a lithium salt. The non-aqueous organic solution functions as a medium through with ions may move in the middle of electrochemical reaction of the lithium-ion battery cell 121. The non-aqueous organic solution may include a carbonate-containing solvent, an ester-containing solvent, a ketone-containing solvent, an alcohol-containing solvent, or an aprotic solvent. The carbonate-containing solvent may be prepared by mixing a cyclic carbonate with a chain carbonate. In this case, the cyclic carbonate and the chain carbonate may be mixed at a volume ratio of about 1:1 to about 1:9. Then, the electrolyte may have high performance.

The non-aqueous organic solution may further include an aromatic hydrocarbon-containing organic solvent in addition to a carbonate-containing solvent. The carbonate-containing solvent and the aromatic hydrocarbon-containing organic solvent may be mixed at a volume ratio of about 1:1 to about 30:1. The electrolyte (non-aqueous electrolyte) may further include a vinylene carbonate compound or an ethylene carbonate compound.

The lithium salt dissolves in the non-aqueous organic solution and functions as a lithium ion supply source. The lithium salt facilitates the movement of lithium ions between the positive electrode 1211 and the negative electrode 1212. The lithium salt may be selected from LiPF₆, LiBF₄, LiSbF₆, LiAsF₆, LiC₄F₉SO₃, LiClO₄, LiAlO₂, LiAlCl₄, LiN(CₓF₂ₓ₊₁SO₂)(C_{y}F_{2y+1}SO₂) (where x and y are natural numbers), LiCl, Lil, LiB(C₂O₄)₂ (lithium bis(oxalato) borate: LiBOB), or a combination thereof. The content of the lithium salt may be within the range of about 0.1 M to about 2.0 M.

The separator 1213 separates the positive electrode 1211 and the negative electrode 1212 and provides a lithium ion path therebetween. The separator 1213 may include a material having a low degree of resistance against the movement of ions in the electrolyte and easily impregnated with the electrolyte. For example, the separator 1213 may include a material selected from glass fiber, polyester, Teflon, polyethylene, polypropylene, polytetrafluoroethylene (PTFE), or a combination thereof. For example, the separator 1213 may include a polyolefin-containing polymer such as polyethylene or polypropylene. In addition, the separator 1213 may include a ceramic or polymer ingredient for ensuring the heat resistance and mechanical strength of the separator 1213.

As described above, the internal resistance of the second battery pack 120 including the second battery cells 121 is lower than that of the first battery pack 110 including the first battery cells 111. The high output power characteristics and high input power characteristics of the second battery pack 120 are superior to those of the first battery pack 110. In addition, the maximum operation voltage of the second battery pack 120 is higher than that of the first battery pack 110.

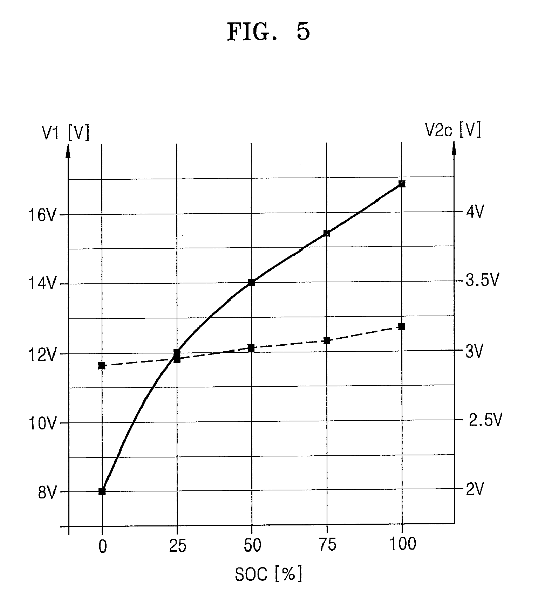

FIG. 5 is a graph illustrating the voltage levels of the first and second battery packs 110 and 120 of the automotive battery system 100 during a charge operation according to an embodiment of the invention.

In detail, referring to FIG. 5, the open-circuit voltage V1 of the first battery pack 110 is shown according to the SOC of the first battery pack 110, and the open-circuit voltage V2c of a second battery cell 121 of the second battery pack 120 is shown according to the SOC of the second battery cell 121. As described with reference to FIG. 3, the voltage sensitive switching device 123 connected to the second battery cell 121 is turned on if the cell voltage of the second battery cell 121 is higher than a reference voltage. In the following description, it is assumed that the reference voltage is set to 3.5 V. The graph illustrated in FIG. 5 is an example. That is, the embodiments of the present disclosure are not limited thereto.

Referring to FIG. 5, the open-circuit voltage V1 of the first battery pack 110 increases as the SOC of the first battery pack 110 increases. When the first battery pack 110 is completely discharged, that is, the SOC of the first battery pack 110 is 0%, the open-circuit voltage V1 of the first battery pack 110 is about 11.7 V. When the first battery pack 110 is completely charged, that is, the SOC of the first battery pack 110 is 100%, the open-circuit voltage V1 of the first battery pack 110 is about 12.7 V. The charge voltage of the alternator 200 for charging the first battery pack 110 may be set within the range of about 13.2 V to about 14.4 V, for example, to 14 V.

As shown in FIG. 5, the open-circuit voltage V2c of the second battery cell 121 of the second battery pack 120 increases as the SOC of the second battery cell 121 increases. When the second battery cell 121 is completely discharged, that is, the SOC of the second battery cell 121 is 0%, the open-circuit voltage V2c of the second battery cell 121 is about 2 V. When the second battery cell 121 is completely charged, that is, the SOC of the second battery cell 121 is 100%, the open-circuit voltage V2c of the second battery cell 121 is about 4.4 V. As described above, if the cell voltage of the second battery cell 121 is higher than the reference voltage, for example, 3.5 V, the voltage sensitive switching device 123 connected to the second battery cell 121 is turned on.

According to an embodiment of the invention, in the automotive battery system 100, the first battery pack 110 and the second battery pack 120 are connected in parallel. In a state in which the first and second battery packs 110 and 120 are connected in parallel, the pack voltage of the first battery pack 110 is equal to the pack voltage of the second battery pack 120. That is, the pack voltages of the first and second battery packs 110 and 120 connected in series are different from the voltage levels shown in FIG. 5.

While the automotive battery system 100 is being charged by the alternator 200, the pack voltages of the first and second battery packs 110 and 120 are substantially the same as the charge voltage of the alternator 200 which may be set to be within the range of about 13.2 V to about 14.4 V, for example, 14 V. However, when the automotive battery system 100 is not charged by the alternator 200, the pack voltages of the first and second battery packs 110 and 120 are substantially the same as the pack voltage of the second battery pack 120 measured in a completely charged state, for example, about 13 V or lower.

As described above, if the reference voltage is set to 3.5 V, the second battery cells 121 of the second battery pack 120 are balanced only when the automotive battery system 100 is charged by the alternator 200 and the charge voltage of the alternator 200 is about 14 V or higher. When the automotive battery system 100 is not charged by the alternator 200, even though the open-circuit voltage of the second battery pack 120 is higher than about 14 V, the pack voltage of the second battery pack 120 is about 14 V or lower because of the first battery pack 110 connected in parallel to the second battery pack 120, and thus the second battery cells 121 of the second battery pack 120 are not balanced.

According to the above-described embodiments of the invention, cell balancing occurs only at particular conditions in an automatic manner using passive elements instead of using a control circuit for active control. Therefore, the use of an additional control circuit is not required, and thus the manufacturing costs and time of the automotive battery system 100 may be reduced.

FIG. 6 is a block diagram illustrating a voltage sensitive switching device 123 of the second battery pack 120 according to an embodiment of the invention.

Referring to FIG. 6, the second battery pack 120 includes a second battery cell BC, a balancing resistor Rb, and the voltage sensitive switching device 123. The second battery cell BC and the balancing resistor Rb correspond to the second battery cells 121 and the balancing resistors 122 described with reference to FIGS. 3, and thus descriptions thereof will not be repeated.

The voltage sensitive switching device 123 is connected between a first node N1 and a second node N2. In FIG. 6, the balancing resistor Rb is connected between a positive electrode of the second battery cell BC and the first node N1. However, this is only an configuration. That is, in another example, the balancing resistor Rb may be connected between the second battery cell BC and the second node N2.

The voltage sensitive switching device 123 includes a first resistor R1 and a second resistor R2 that are connected in series between the first node N1 and a second node N2. The first and second resistors R1 and R2 are connected to each other at a third node N3. The first and second resistors R1 and R2 constitute a voltage divider outputting a divided voltage to the third node N3 which is proportional to a voltage difference between the first and second nodes N1 and N2.

Since the resistance level of the balancing resistor Rb is much lower than that the resistance levels of the first and second resistors R1 and R2, the voltage difference between the first and second nodes N1 and N2 is substantially the same as the cell voltage of the second battery cell BC. The voltage divider outputs a divided voltage to the third node N3, and the divided voltage is proportional to the cell voltage of the second battery cell BC.

The voltage sensitive switching device 123 includes a shunt regulator SR connected to the first node N1, the second node N2, and the third node N3. If the divided voltage output from the voltage divider, that is, the voltage of the third node N3, is higher than a preset critical voltage, the shunt regulator SR electrically connects the first node N1 and the second node N2. For example, the preset critical voltage may be 2.5 V. For example, if the voltage of the third node N3 is higher than 2.5 V, the voltage sensitive switching device 123 is turned on, and the first and second nodes N1 and N2 are electrically connected to each other. If the voltage of the third node N3 is lower than 2.5 V, the voltage sensitive switching device 123 is turned off, and the first and second nodes N1 and N2 are electrically disconnected from each other.

As described above, if the cell voltage of the second battery cell BC is higher than the reference voltage, for example, 3.5 V, the voltage sensitive switching device 123 is turned on. The reference voltage may be set based on the resistance ratio of the first resistor R1 and the second resistor R2 and the critical voltage of the shunt regulator SR. For this, the first resistor R1 or the second resistor R2 may be a variable resistor. For example, if the critical voltage of the shunt regulator SR and the resistance of the second resistor R2 are respectively 2.5 V and 500 kΩ, the resistance of the first resistor R1 may be set to 700 kΩ so as to set the reference voltage to 3.5 V.

For example, if the cell voltage of the second battery cell BC is higher than 3.5 V, the shunt regulator SR is turned on, and balancing current Ibal flows through the balancing resistor Rb. Due to the balancing current Ibal, the voltage difference between the first and second nodes N1 and N2 becomes lower than the cell voltage of the second battery cell BC. As the balancing current Ibal increases, the voltage difference between the first and second nodes N1 and N2 reaches 3.5 V, and the shunt regulator SR is turned off. Then, the balancing current Ibal substantially becomes 0 A. A current flowing along the balancing resistor Rb, the first resistor R1, and the second resistor R2 is substantially 0 A because the first resistor R1 and the second resistor R2 have relatively high resistance values. Therefore, the voltage difference between the first and second nodes N1 and N2 returns to a value higher than 3.5 V. In this manner, when the cell voltage of the second battery cell BC is higher than 3.5 V, the voltage difference between the first and second nodes N1 and N2 may be maintained at about 3.5 V. That is, the first resistor R1, the second resistor R2, and the shunt regulator SR constitute a feedback circuit operating as described above, and when the cell voltage of the second battery cell BC is higher than 3.5 V, the voltage difference between the first and second nodes N1 and N2 may be surely maintained at about 3.5 V. When the cell voltage of the second battery cell BC is lower than 3.5 V, the voltage difference between the first and second nodes N1 and N2 is substantially the same as the cell voltage of the second battery cell BC, and thus the balancing current Ibal is substantially 0 A.

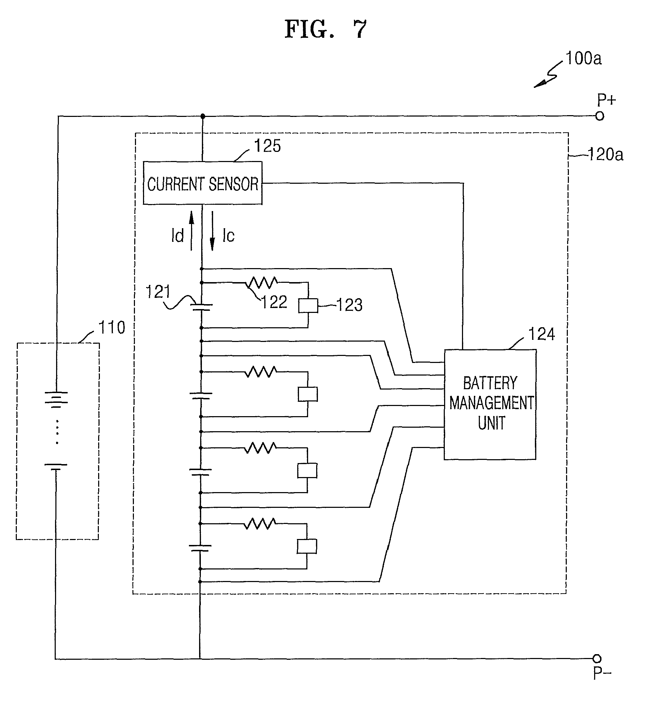

FIG. 7 is a schematic block diagram illustrating an automotive battery system 100a according to another embodiment of the invention.

Referring to FIG. 7, the automotive battery system 100a includes a first battery pack 110 and a second battery pack 120a connected in parallel. The first and second battery packs 110 and 120a are connected in parallel between external terminals P+ and P-. The first battery pack 110 is substantially the same as the first battery pack 110 described with reference to FIG. 3, and thus a description thereof will not be repeated.

The second battery pack 120a includes a plurality of second battery cells 121, a plurality of balancing resistors 122, a plurality of voltage sensitive switching devices 123, and a battery management unit 124. The second battery cells 121, the balancing resistors 122, and the voltage sensitive switching devices 123 are substantially the same as those described with reference to FIG. 3, and thus descriptions thereof will not be repeated.

The battery management unit 124 manages the overall operation of the second battery pack 120a. The battery management unit 124 may communicate with an electric control unit of the automobile 1000 (refer to FIG. 1). The battery management unit 124 may transmit information about the second battery pack 120a to the electric control unit and may be controlled by the electric control unit.

The battery management unit 124 may measure the cell voltages of the second battery cells 121, the pack current of the second battery pack 120a, temperature, etc., and may transmit measured values to the electric control unit. The battery management unit 124 may control a charge/discharge switch (not shown) according to control commands sent from the electric control unit. If the second battery pack 120a undergoes an abnormal situation such as a low voltage, high voltage, overcurrent, or high temperature situation, the battery management unit 124 may detect the abnormal situation and turn off the charge/discharge switch. The charge/discharge switch may be disposed between the second battery cells 121 and the external terminal P+ or P-. If the charge/discharge switch is turned off, charging and discharging of the second battery pack 120a are interrupted.

The battery management unit 124 may determine the SOC of the second battery cells 121 based on detected cell voltage values, pack current values, etc.

The battery management unit 124 may determine the SOC of the second battery cells 121 based on pack current values by a coulomb counting method. However, the battery management unit 124 is not limited thereto. That is, the battery management unit 124 may determine the SOC of the second battery cells 121 by other methods. For example, the battery management unit 124 may determine SOC based on a relationship between SOC and open circuit voltage. In addition, the battery management unit 124 may calculate the SOC of the second battery cells 121 more precisely by using temperature information. In addition, the battery management unit 124 may determine the state of health (SOH) of the second battery cells 121.

The second battery pack 120a may include a current sensor 125 so as to detect the pack current of the second battery pack 120. The current sensor 125 may detect a charge current Ic input to the second battery pack 120 and a discharge current Id output from the second battery pack 120. The second battery pack 120a may further include a voltage sensor and a temperature sensor so as to detect the cell voltages and temperatures of the second battery cells 121. As shown in FIG. 7, the battery management unit 124 may be directly connected to nodes between the second battery cells 121 for directly detecting the cell voltages of the second battery cells 121.

The battery management unit 124 may determine the SOC of the second battery cells 121 based on pack current values by a coulomb counting method. According to an embodiment of the invention, a portion of a charge current Ic may be consumed by the balancing resistors 122. If the portion of the charge current Ic consumed by the balancing resistors 122 is not considered, the SOC of the second battery cells 121 may inaccurately be determined. In addition, according to the embodiment, since cell balancing is automatically performed without direct control by the battery management unit 124, it may be difficult to consider electricity consumed by the balancing resistors 122.

Therefore, in the embodiment, the battery management unit 124 may calculate electric energy consumed by the balancing resistors 122 based on the cell voltages of the second battery cells 121 and a reference voltage for operations of the voltage sensitive switching devices 123. The battery management unit 124 may store information about the reference voltage and the resistance values of the balancing resistors 122. For example, if the difference between a detected cell voltage and the reference voltage is applied between both ends of a balancing resistor 122, the battery management unit 124 may calculate the amount of electric energy consumption by the balancing resistor 122.

The battery management unit 124 may more accurately determine the SOC of the second battery pack 120a based on a value obtained by subtracting electric energy consumed by the balancing resistors 122 from electric energy supplied to the second battery pack 120a. Electric energy supplied to the second battery pack 120a may be calculated by a coulomb counting method.

The battery management unit 124 may be referred to as a micro controller unit or a battery management system.

As described above, according to the one or more of the above embodiments of the invention, different kinds of first and second battery packs 110 and 120 (or 120a) are directly connected in parallel to each other without using a power converter so as to prevent switching and conversion loss when electricity is transmitted between the first and second battery packs 110 and 120. In addition, according to the one or more of the embodiments, cell balancing may be performed without control by a microprocessor. Cell balancing may be performed when the first and second battery packs 110 and 120 are charged by a charge voltage supplied from the alternator 200. The reference voltage for cell balancing may be set to be lower than a voltage corresponding to the maximum operation voltage of the first battery pack 110, and thus cell balancing may not be performed when the first and second battery packs 110 and 120 are discharged. Therefore, electric energy may not be consumed by cell balancing during a discharge operation. In addition, the reference voltage for cell balancing may be set to be equal to the open-circuit voltage of the second battery pack 120 measured when the SOC of the second battery pack 120 is medium, and thus electric energy may not be consumed by cell balancing when the SOC of the second battery pack 120 is low. Therefore, the automotive battery system 100 may have improved efficiency, and the fuel efficiency of the automobile 1000 may be improved.

The embodiments described herein are merely examples and do not limit the scope of the inventive concept in any way. For simplicity of description, other functional aspects of conventional electronic configurations, control systems, software and the systems may be omitted. Furthermore, line connections or connection members between elements depicted in the drawings represent functional connections and/or physical or circuit connections by way of example, and in actual applications, they may be replaced or embodied as various additional functional connection, physical connection or circuit connections. Also, the described elements may not be inevitably required elements for the application of the inventive concept unless they are specifically mentioned as being "essential" or "critical."

The singular forms "a," "an" and "the" in this present disclosure, in particular, claims, may be intended to include the plural forms as well. Unless otherwise defined, the ranges defined herein are intended to include any embodiment to which values within the range are individually applied and may be considered to be the same as individual values constituting the range in the detailed description. The examples or terms (for example, etc.) used herein are to merely describe embodiments in detail and not intended to limit the inventive concept unless defined by the following claims. Also, those skilled in the art will readily appreciate that many alternation, combination and modifications, may be made according to design conditions and factors within the scope of the appended claims and their equivalents.

It should be understood that embodiments of the invention described herein should be considered in a descriptive sense only and not for purposes of limitation. Descriptions of features or aspects within each embodiment should typically be considered as available for other similar features or aspects in other embodiments.

While one or more embodiments of the invention have been described with reference to the figures, it will be understood by those of ordinary skill in the art that various changes in form and details may be made therein without departing from the scope of the invention as defined by the following claims.

## Claims

1. An automotive battery system comprising:
a first battery pack comprising a plurality of first battery cells connected in series;
and
a second battery pack connected in parallel to the first battery pack,
wherein the second battery pack comprises:
n second battery cells connected in series;
n voltage sensitive switching devices respectively connected to the n second battery cells; and
n balancing resistors respectively connected in parallel to the n second battery cells through the n voltage sensitive switching devices,
wherein each of the voltage sensitive switching devices is adapted to be turned on if a corresponding second battery cell of the n second battery cells has a cell voltage higher than a reference voltage, and
the reference voltage is set to be higher than a value obtained by dividing a maximum operation voltage of the first battery pack by n, where n is a natural number equal to or greater than 2.

2. An automotive battery system according to claim 1, wherein the reference voltage is set to be higher than a value obtained by dividing an open-circuit voltage of the first battery pack in a completely charged state by n.

3. An automotive battery system according to claim 1, wherein the reference voltage is set to be higher than a first open-circuit voltage of the corresponding second battery cell measured at 30% state of charge (SOC) but lower than a second open-circuit voltage of the corresponding second battery cell measured at 70% SOC.

4. An automotive battery system according to claim 1, further comprising external terminals for connection with an alternator that converts kinetic energy of an automobile into electric energy and supplies the electric energy to the first and second battery packs,
wherein the reference voltage is set to be lower than a value obtained by dividing a charge voltage, output from the alternator to the first and second battery packs when the automobile operates in a regenerative braking mode, by n.

5. An automotive battery system according to claim 4, wherein when the automobile operates in the regenerative braking mode, balancing current flows through the balancing resistors, and
the balancing current increases as cell voltages of the second battery cells connected in parallel to the balancing resistors increase.

6. An automotive battery system according to any preceding claim, wherein balancing current flowing through the balancing resistors is lower than about 100 mA.

7. An automotive battery system according to claim 1, wherein each of the voltage sensitive switching devices comprises:
a voltage divider connected between a first node and a second node and outputting a divided voltage in proportion to a voltage difference between the first and second nodes; and
a shunt regulator connected between the first and second nodes, the shunt regulator being configured to electrically connect the first and second nodes if the divided voltage output from the voltage divider is higher than a preset critical voltage.

8. An automotive battery system according to claim 7, wherein each voltage divider comprises a first resistor and a second resistor that are connected in series between the first and second nodes, and
the reference voltage is set based on a resistance ratio of the first and second resistors and the critical voltage.

9. An automotive battery system according to any preceding claim, wherein the second battery pack further comprises a battery management unit detecting cell voltages of the second battery cells and a pack current of the second battery pack and determining SOC of the second battery pack based on the cell voltages and the pack current.

10. An automotive battery system according to claim 9, wherein the battery management unit is adapted to calculate electric energy consumed by the balancing resistors based on the cell voltages of the second battery cells and the reference voltage and determines the SOC of the second battery pack based on a value obtained by subtracting the electric energy consumed by the balancing resistors from electric energy supplied to the second battery pack.

11. An automotive battery system according to any preceding claim, wherein each of the second battery cells comprises a negative electrode comprising a negative electrode active material, and
the negative electrode active material comprises soft carbon.

12. An automotive battery system according to one of claims 1 to 10, wherein each of the second battery cells comprises a negative electrode comprising a negative electrode active material, and
the negative electrode active material comprises a carbonaceous material in which interlayer spacing d₀₀₂ between (002) planes is within a range of about 0.34 nm to about 0.50 nm when measured by an X-ray diffraction method using CuKα.

13. An automotive battery system according to any preceding claim, wherein each of the second battery cells comprises a positive electrode comprising a positive electrode active material, and
the positive electrode active material comprises lithium nickel oxide, lithium cobalt oxide, lithium nickel manganese oxide, lithium nickel cobalt manganese oxide, lithium nickel cobalt aluminum oxide, lithium iron phosphate oxide, or a combination thereof.

14. An automotive battery system according to any preceding claim, wherein the first battery cells are lead battery cells.

15. An automotive battery system according to any preceding claim, wherein the second battery pack has a maximum operation voltage higher than that of the first battery pack, and
the second battery pack has internal resistance lower than that of the first battery pack.
